## Europäisches Patentamt

## European Patent Office

## Office européen des brevets

(19)

(11) **EP 0 414 838 B2**

(12) **NEUE EUROPÄISCHE PATENTSCHRIFT**

(45) Veröffentlichungstag und Bekanntmachung des Hinweises auf die Entscheidung über den Einspruch:
**28.04.2004   Patentblatt 2004/18**

(45) Hinweis auf die Patenterteilung:
**22.09.1993   Patentblatt 1993/38**

(21) Anmeldenummer: **90901804.6**

(22) Anmeldetag: **26.01.1990**

(51) Int Cl.⁷: **H04B 1/66**

(86) Internationale Anmeldenummer:
**PCT/EP1990/000143**

(87) Internationale Veröffentlichungsnummer:
**WO 1990/009063 (09.08.1990 Gazette 1990/19)**

(54) **VERFAHREN ZUR ÜBERTRAGUNG EINES SIGNALS**

PROCESS FOR TRANSMITTING A SIGNAL

PROCEDE DE TRANSMISSION DE SIGNAUX

(84) Benannte Vertragsstaaten:
**AT BE CH DE DK ES FR GB IT LI LU NL SE**

(30) Priorität: **01.02.1989   DE 3902948**

(43) Veröffentlichungstag der Anmeldung:
**06.03.1991   Patentblatt 1991/10**

(73) Patentinhaber: **Thomson Consumer Electronics Sales GmbH**
**30625 Hannover (DE)**

(72) Erfinder: **EDLER, Bernd**
**D-3000 Hannover (DE)**

(74) Vertreter: **Hartnack, Wolfgang, Dipl.-Ing. et al**
**Deutsche Thomson-Brandt GmbH**
**European Patent Operations**
**Karl-Wiechert-Allee 74**
**30625 Hannover (DE)**

(56) Entgegenhaltungen:
EP-A- 0 251 028         DE-A1- 3 506 912
DE-B- 2 050 114

- **IEEE TRANSACTIONS ON ACOUSTICS SPEECH, AND SIGNAL PROCESSING, volume 34, No. 5, October 1986 JOHN P. PRINCEN, AND ALAN BERNARD BRADLEY:"Analysis/Synthesis Filter Bank Design Based on Time Domain Aliasing Cancellation", cited in the application**
- **Y.B. Yu und A.G. Constantinides, "Variable block size and position transform coding", Proceedings of the fourth European Signal Processing Conference, September 1988, Bd.2, Seiten 1011 bis 1013.**
- **T.F. Quatieri, Jr, "Minimum and mixed phase speech analysis-synthesis by adaptive homomorphic deconvolution", IEEE Transactions on Acoustics, Speech and Signal processing, August 1979, B.D. ASSP-27, Nr. 4, Seiten 328 bis 335**
- **N.S. Jayant und P. Noll, Digital coding of waveforms, principles and applications to speech and video", Prentice-Hall Inc.; 1984, ISBN 0-13-211913-7, Seiten xi, xii, 104, 105, 170 bis 173, 244, 245, 418, 419, 564 bis 567, 574, 575, 578 und 579.**

EP 0 414 838 B2

**Beschreibung**

Die Erfindung betrifft ein Verfahren zur Übertragung eines Signals nach dem Oberbegriff des Anspruchs.

Bei der Übertragung eines Audiosignals, z.B. bei der Rundfunkübertragung, Kabelübertragung, Satellitenübertragung und bei Aufzeichnungsgeräten istes bekannt, das analoge Audiosignal in ein digitales Audiosignal mit einer bestimmten Auflösung umzuwandeln, in dieser Form zu übertragen und bei der Wiedergabe wieder in ein analoges Signal umzusetzen. Durch die digitale Übertragung wird insbesondere bei der Wiedergabe ein größerer Störabstand erreicht.

Die für die Übertragung eines solchen Signals erforderliche Bandbreite ist im wesentlichen bestimmt durch die Zahl der zu übertragenden Abtastwerte pro Zeiteinheit sowie durch die Auflösung.

In der Praxis besteht die Forderung, die für die Übertragung notwendige Bandbreite möglichst klein zu halten, um mit einem schmalbandigen Kanal auszukommen oder über einen vorhandenen Kanal möglichstviele Audiosignale gleichzeitig übertragen zu können. Die erforderliche Bandbreite läßt sich an sich verringern durch eine Reduzierung der Abtastwerte oder der Anzahl der Bits pro Abtastwert.

Diese Maßnahme hat aber in der Regel eine Verschlechterung bei der Wiedergabe zur Folge. Bei einem bekannten Verfahren (DE OS 35 06 912.0) wird zur Verbesserung der Wiedergabequalität das digitale Audiosignal in zeitlich aufeinanderfolgenden Abschnitten in ein Kurzzeitspektrum transformiert, welches jeweils für die Zeitabschnitte, z.B. 20 ms, die Spektralkomponenten des Signals darstellt. In dem Kurzzeitspektrum lassen sich auf Grund psychoakustischer Gesetzmäßigkeiten im allgemeinen Komponenten, die vom Hörer nicht wahrgenommen werden, also im nachrichtentechnischen Sinn irrelevant sind, besser auffinden, als im Zeitbereich. Diese Komponenten werden bei der Übertragung weniger gewichtet oder ganz weggelassen. Durch diese Maßnahme kann bei der Übertragung ein beträchtlicher Teil der sonst notwendigen Daten entfallen, so daß die mittlere Bitrate wesentlich verringertwerden kann. Weiterbildungen diese aus DE-A-3 506 912 bekannten Verfahrens werden in EP-A-0 251 028 beschrieben.

Zur Aufteilung des Signals in Abschnitte eignet sich das aus J. P. Princen and A. B. Bradley, "Analysis/Synthesis Filterbank Design based on Time Domain Aliasing Cancellation," IEEE-Transactions Acoustics, Speach, Signal-Processing, Volume ASSP-34, pages 1153 -1161, Oktober 1986, beschriebene Verfahren. Es wird hierin eine Transformation beschrieben, bei der überlappende Blöcke mit abgerundeten Fensterfunktionen in den Fenstern ohne zusätzliche Koeffizienten im Frequenzbereich erzeugt werden. Bei diesem Verfahren werden zunächst N Werte mit Hilfe einer Fensterfunktion f(n) der Länge N aus dem Eingangssignal herausgeschnitten und anschließend zu N/2 signifikanten Koeffizienten im Frequenzbereich transformiert. Die Rücktransformation berechnet aus dem N/2 Koeffizienten N Abtastwerte, die wiederum mit der Fensterfunktion f(n) gewichtet werden.

Das Ausgangssignal der Rücktransformation unterscheidet sich jedoch vom Eingangssignal der Hintransformation. Die exakte Rekonstruktion des Einganssignals wird erst dadurch möglich, daß die Ausgangswerte aufeinanderfolgender Rücktransformationen im Überlappungsbereich von jeweils N/2 Abtastwerten addiert werden. Damit durch dieses sogenannte "Overlap-Add" das Eingangssignal wiedergewonnen werden kann, muß die Fensterfunktion f(n) folgende Bedingungen erfüllen:

$$f(N - 1 - n) = f(n) \qquad 0 \leqq n \leqq N - 1 \qquad\qquad (1)$$

$$f^2(N/2 - 1 - n) + f^2(n) = 2 \qquad 0 \leqq n \leqq N/2 - 1 \qquad\qquad (2)$$

Die erste Bedingung entspricht einer Symmetrie von f(n). Die zweite Bedingung entspricht der Punktsymmetrie des Quadrats von f(n) jeweils in einer Fensterhälfte. Unter Berücksichtigung dieser Bedingungen kann die effektive Fensterlänge der Transformation zwischen N/2 und N Abtastwerten variiert werden.

Die Wahl der Fensterlänge bei Anwendung dieser Verfahren in Transformationskodern führt zu folgenden Auswirkungen. Eine große Fensterlänge mit möglichst abgerundeter Form ermöglicht eine gute Frequenzselektivität. Dabei dehnt sich der Fehler durch Quantisierung der Koeffizienten nach der Rücktransformation über die gesamte effektive Fensterlänge aus. Dies kann sich besonders bei starken Sprüngen der Amplitude des zu codierenden Signals negativ auf die subjektive Qualität des codierten Signals auswirken.

Die Wahl kürzerer Fenster bewirkt eine Verschlechterung der Frequenzselektivität, was sich besonders bei stark korrelierten Eingangssignalen negativ auf den zu erzielenden Transformationsgewinn auswirkt. Dagegen lassen sich Fehler durch Quantisierung der Koeffizienten bei starken Signalsprüngen auf das betreffende Fenster beschränken, so daß ihre Auswirkungen auf benachbarte Fenster verhindert werden.

Der Erfindung liegt die Aufgabe zugrunde, ein Verfahren zur Übertragung eines Signals nach dem Oberbegriff des Anspruchs dahingehend zu verbessern, daß eine optimale Frequenzselektivität und hohe subjektive Qualität des codierten und decodierten Signals erzielt wird.

Diese Aufgabe wird durch die Merkmale des Anspruchs gelöst.

Die Fensterfunktionen eines nachfolgenden Fensters werden im überlappenden Bereich mit dem vorangestellten Fenster durch Spiegelung der in diesem Bereich vorliegenden Fensterfunktionen des vorangestellten Fensters gebildet. Dadurch läßt sich eine noch bessere Anpassung an schnelle Signaländerungen erzielen. Bei der oben beschriebenen Fensterfunktion wurde noch davon ausgegangen, daß bei sämtlichen Transformationen gleiche Fensterfunktionen verwendet werden. Geht man jedoch von der Verwendung unterschiedlicher Fensterfunktionen, z. B. f(n) und g(n) in aufeinanderfolgenden Blöcken aus, so zeigt sich, daß sich die Beziehungen (1) und (2) nur noch auf den Bereich beziehen in dem sich die beiden Hälften der Fenster überlappen:

$$f(N - 1 - n) = g(n) \qquad 0 \leqq n \leqq N/2 - 1 \qquad\qquad (3)$$

$$f^2(N/2 + n) + g^2(n) = 2 \qquad 0 \leqq n \leqq N/2 - 1 \qquad\qquad (4)$$

Beide Gleichungen betreffen in diesem Fall lediglich die zweite Hälfte der Funktion f und die erste Hälfte der Funktion g. Somit lassen sich die Fensterhälften eines Blocks unabhängig voneinander wählen, wenn sie nur mit den entsprechenden Fensterhälften der benachbarten Blöcke zusammen die Gleichungen (3) und (4) erfüllen.

Das Verfahren nach der Erfindung wird anhand der Zeichnung erläutert. Diese zeigt:

in Fig. 1a - c    Fensterfunktionen mit unterschiedlicher Breite,
in Fig. 2         unsymmetrische Fensterfunktionen und
in Fig. 3a        den Verlauf eines Eingangssignals und
in Fig. 3b        eine Fensterfunktion die auf dieses Eingangssi gnal angepaßt ist.

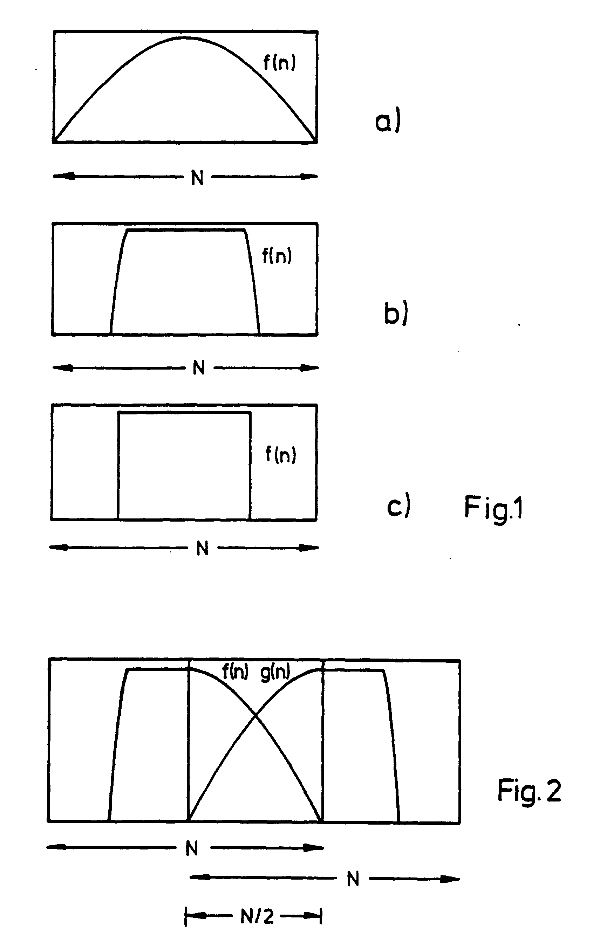

In Fig. 1 sind mehrere Fenster konstanter Breite (b) mit unterschiedlichen Fensterfunktionen f(n) dargestellt. Die Fenster werden jeweils so zusammengesetzt, daß sich die benachbarten Fenster zur Hälfte überlappen. Dadurch entsteht bei der sinusförmigen Fensterfunktion f(n) in Fig. 1a ebenfalls eine Überlappung zur Hälfte, bei der Darstellung gemäß Fig. 1b eine Teilüberlappung, die weniger als die Hälfte beträgt und in Fig. 1c nur eine Berührung der beiden Schenkel der Fensterfunktion f(n).

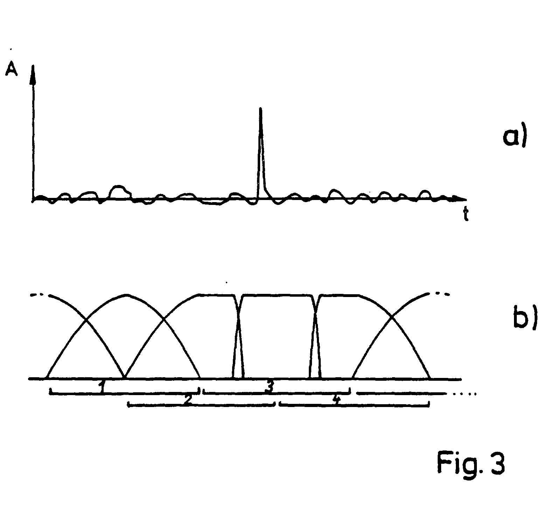

Fig. 2 zeigt die Überlagerung zweier Fenster mit unsymmetrischen Fensterfunktionen f(n) und g(n). Die Fensterfunktionen sind jedoch in ihrem gemeinsamen überlappenden Bereich so ausgestaltet, daß sich ihre Resultierenden zu 1 ergänzen.

In Fig. 3a ist ein Amplitudenverlauf A(t) eines Eingangssignals dargestellt. Wie zu erkennen ist, besitzt das Signal zunächst eine gleichmäßige geringe Amplitude, der ein Signalsprung folgt, worauf sich die ursprüngliche Amplitude fortsetzt. Darunter sind in Fig. 3b Fensterfunktionen der Fenster dargestellt, mit denen dieses Signal optimal bearbeitet werden kann. Im ersten Bereich 1 handelt es sich um sinusförmige Fensterfunktionen, die eine hohe Frequenzselektivität ermöglichen. Das Fenster 3, in dem das Signal mit der hohen Amplitude hineinfällt, besitzt dagegen eine Fensterfunktion die sehr schmal ist. Die Fensterfunktionen der benachbarten Fenster 2 und 4, also des vorhergehenden und des nachfolgenden Fensters besitzen im überlappenden Bereich eine entsprechend angepaßte Fensterfunktion, so daß sich in diesen Bereichen die Fensterfunktionen zu eins ergänzen. Damit haben die Fensterfunktionen in diesen beiden angrenzenden Fenstern 2 und 4 eine unsymmetrische Gestalt. Quantisierungsstörungen, die innerhalb des Fensters 3 auftreten würden, in die der Signalsprung hineinfällt, werden so auf den Bereich der Fensterfunktionen des Fensters 3 beschränkt und damit etwa gegenüber einer Fensterfunktion mit sinusförmigem Verlauf auf die Hälfte der zeitlichen Ausdehnung reduziert. Durch den Verdeckungseffekt des Signalsprunges ergibt sich so trotz der verringerten Frequenzselektivität eine subjektive Verbesserung der Audio-Qualität.

**Patentansprüche**

1. Verfahren zur Übertragung eines Audiosignals, das durch Fensterfunktionen (f(n), g(n)) in aufeinanderfolgende, überlappende Fenster aufgeteilt wird, dass dann die in den Fenstern enthaltenen Teilsignale jeweils durch Transformation in ein Spektrum umgewandelt werden, anschließend die Spektren codiert, übertragen, nach der Übertragung decodiert und durch Rücktransformation wieder in Teilsignale überführt werden, und dass schließlich die die Teilsignale enthaltenden Fenster überlappend aneinandergefügt werden, wobei die überlappenden Bereiche der Fenster so gewichtet sind, dass sich die Resultierende der Fensterfunktionen (f(n), g(n)) zu eins ergibt und die Fensterfunktion eines nachfolgenden Fensters im überlappenden Bereich mit dem vorangestellten Fenster durch Spiegelung der in diesem Bereich vorliegenden Fensterfunktion des vorangestellten Fensters gebildet wird, **dadurch gekennzeichnet, dass** die Länge der Fensterfunktionen (f(n), g(n)) in Abhängigkeit von Signaländerungen gewählt wird, wobei die Länge der Fensterfunktionen bei großen Signaländerungen klein und bei kleinen Signaländerungen groß gewählt wird, und dass ein Satz unterschiedlicher Fensterfunktionen (f(n), g(n)) definiert wird, aus denen in Abhängigkeit von Signaländerungen jeweils eine Fensterfunktion vergeben wird und bei der Übertragung eine die vergebene Fensterfunktion eindeutig bestimmende Kennungszahl übertragen wird, und wobei in dem Satz eine sinusförmige Fensterfunktion mit hoher Frequenzselektivität und eine demgegenüber schmale Fensterfunktion und zwei verschiedene Fensterfunktionen mit unsymmetrischer Gestalt enthalten sind, und wobei ein Signalsprung mit hoher Amplitude in ein Fenster mit einer schmalen Fensterfunktion hineinfällt und dem Fenster mit der schmalen Fensterfunktion jeweils ein Fenster mit der entsprechenden unsymmetrischen Fensterfunktion benachbart ist und diesem jeweils ein Fenster mit der sinusförmigen Fensterfunktion benachbart ist, und wobei die entsprechenden Fensterhälften der Fensterfunktionen f(n), g(n) der benachbarten Fenster zusammen die folgenden Gleichungen im Überlappungsbereich erfüllen:

$$f(N-1-n) = g(n) \qquad 0 \leq n \leq N/2-1$$

$$f^2(N/2+n) + g^2(n) = 2 \qquad 0 \leq n \leq N/2-1$$

N gleich Anzahl der Abtastwerte diese Fenster.

## Claims

1. Method for transmitting an audio signal, which is divided by means of window functions (f(n), g(n)) into successive, overlapping windows, wherein the partial signals contained in said windows are in each case converted by transformation into a spectrum, with the spectra then being coded, transmitted, following transmission decoded and by inverse transformation again formed into partial signals, upon which the windows containing said partial signals are assembled in an overlapping manner, wherein the overlapping regions in the windows are weighted such that the resultant of the window functions (f(n), g(n)) equals one, and wherein the window function of a following window is formed in the overlapping region with a preceding window by mirroring the window function present in this region in the preceding window, **characterised in that** the length of the window functions (f(n), g(n)) is selected as a function of signal changes, wherein the length of the window functions is selected to be small for large signal changes and large for small signal changes, and wherein a set of differing window functions (f(n), g(n)) is defined, from which set in each case one window function is allocated as a function of the signal changes, and wherein, during the transmission, an index number that unambiguously specifies the allocated window function is transmitted, and wherein a sinusoidal window function having a high frequency selectivity and in contrast thereto a small window function and two differing window functions having an unsymmetrical shape are contained in said set, and wherein a signal jump with high amplitude is located in a window having a small window function and wherein in each case the window having a small window function has a corresponding unsymmetrical shape neighbour window function, which unsymmetrical shape neighbour window function has as neighbour a window having the sinusoidal window function, and wherein the corresponding window halves of the window functions f(n), g(n) of the adjacent windows jointly conform in the overlapping region to the equations:

$$f(N-1-n) = g(n) \qquad 0 \leq n \leq N/2-1$$

$$f^2(N/2+n) + g^2(n) = 2 \qquad 0 \leq n \leq N/2-1,$$

N equalling the number of the samples of such windows.

**Revendications**

1.  Procédé pour la transmission d'un signal audio, qui est réparti par des fonctions de fenêtre (f(n), g(n)) en fenêtres consécutives qui se chevauchent de telle manière que les signaux partiels contenus dans les fenêtres sont respectivement transformés par transformation en un spectre, que les spectres sont ensuite codés, transmis, décodés après la transmission et retransformés en signaux partiels par transformation inverse et que finalement les fenêtres qui contiennent les signaux partiels sont assemblées les unes aux autres en se chevauchant, les zones de chevauchement des fenêtres étant pondérées de telle manière que la résultante des fonctions de fenêtre (f(n), g(n)) résulte en un, les fonctions de fenêtre d'une fenêtre qui suit étant formée dans la zone de chevauchement avec la fenêtre qui précède par réflexion de la fonction de fenêtre présente dans cette zone de la fenêtre précédente, **caractérisé en ce que** la longueur des fonctions de fenêtre (f(n), g(n)) est choisie en fonction des variations de signal, la longueur des fonctions de fenêtre étant choisie petite pour de grandes variations de signal et grande pour de petites variations de signal, **en ce qu'**un ensemble de différentes fonctions de fenêtre (f(n), g(n)) est défini, à partir desquelles une fonction de fenêtre est respectivement donnée en fonction des variations du signal et que, lors de la transmission, un chiffre d'identification qui détermine de manière univoque la fonction de fenêtre donnée est transmis,

    une fonction de fenêtre sinusoïdale ayant une sélectivité de fréquence élevée et en contrepartie une fonction de fenêtre étroite et deux fonctions de fenêtres différentes avec une forme asymétrique sont contenues dans l'ensemble, et le saut de signal avec une amplitude élevée tombe dans une fenêtre à fonction de fenêtre étroite, et la fenêtre ayant une fonction de fenêtre étroite est adjacente à une fenêtre ayant la fonction de fenêtre asymétrique correspondante, qui est elle-même adjacente à une fenêtre ayant une fonction de fenêtre sinusoïdale, et

    les moitiés de fenêtre correspondantes des fonctions de fenêtre (f(n), g(n)) des fenêtres adjacentes satisfont ensemble aux équations suivantes dans le domaine de chevauchement :

$$f(N-1-n) = g(n) \qquad 0 \le n \le N/2\text{-}1$$

$$f^2(N/2+n) + g^2(n) = 2 \qquad 0 \le n \le N/2\text{-}1$$

    N étant le nombre de valeurs de balayage de ces fenêtres.

a)

b)

c) Fig.1

Fig. 2

6

a)

b)

Fig. 3